# EUROPEAN PATENT SPECIFICATION

(11) **EP 2 132 000 B1**
(45) Date of publication and mention of the grant of the patent: **18.04.2012**
(21) Application number: 08736779.3
(22) Date of filing: 20.03.2008
(51) Int. Cl.: B24B 23/02, B24B 23/04, H02P 6/00

(54) **COMPACT ELECTRIC GRINDING MACHINE**
KOMPAKTE ELEKTROHANDSCHLEIFMASCHINE
MACHINE À PONCER ÉLECTRIQUE COMPACTE

(30) Priority: 21.03.2007 FI 20075183; 22.08.2007 FI 20075582
(43) Date of publication of application: 16.12.2009
(73) Proprietor: OY KWH MIRKA AB, 66850 Jeppo (FI)
(72) Inventor: NORDSTRÖM, Caj, FI-66850 Jeppo (FI)
(74) Representative: Niemi, Hakan Henrik
(86) International application number: PCT/FI2008/050130
(87) International publication number: WO 2008/113893

(56) References cited:
- EP-A- 0 980 743
- EP-A- 0 982 845
- EP-A- 1 129 819
- WO-A-01/23137
- WO-A-02/24408
- GB-A- 789 189
- JP-A- 63 011 272
- US-A- 2 238 925
- US-A1- 2005 245 183
- YONGXIAO CHEN ET AL: "Topology and preliminary design of slotless brushless DC motor" ELECTRIC MACHINES AND DRIVES CONFERENCE RECORD, 1997. IEEE INTERNATION AL MILWAUKEE, WI, USA 18-21 MAY 1997, NEW YORK, NY, USA,IEEE, US, 18 May 1997 (1997-05-18), pages WB2/7.1-WB2/7.3, XP010231866 ISBN: 978-0-7803-3946-0
- "Power factor corrector, Application manual" POWER FACTOR CORRECTOR, XX, XX, vol. first ed, 1 October 1995 (1995-10-01), pages 7-19, XP007906468

## Description

### TECHNICAL FIELD

The present invention relates to an compact electric hand-held sanding machine with an outer housing and a tool shaft.

### PRIOR ART

Electric sanding machines of the same type are previously known from, for example, US patent 0245182. Here, the intention has been to make a relatively compact and low sanding machine by using a brushless motor and making the proportion between the motor diameter and the motor height great. The drawback of this solution is that the motor diameter unavoidably becomes large and therefore also difficult to be gripped with one hand. Further, since the diameter is large, it becomes disadvantageous to make a hermetic motor with cooling only on the outside. This is very disadvantageous because the air in which the sanding machine is most often used is filled by dust particles that may be both electrically conductive and grinding by nature.

Since electric sanding machines have previously been so large and heavy, it has been necessary to have special sanding machines in, for example, wall grinding. Machines of this type are previously known from, for instance, US patent 5239783 or EP0727281. In these patents, a sanding machine for walls has been made by moving the motor to the far end of the arm and by, for example, using a cable for transmitting power to the grinding head. In this way, balance has been achieved for the machine, but this also makes the machine expensive and difficult to manufacture.

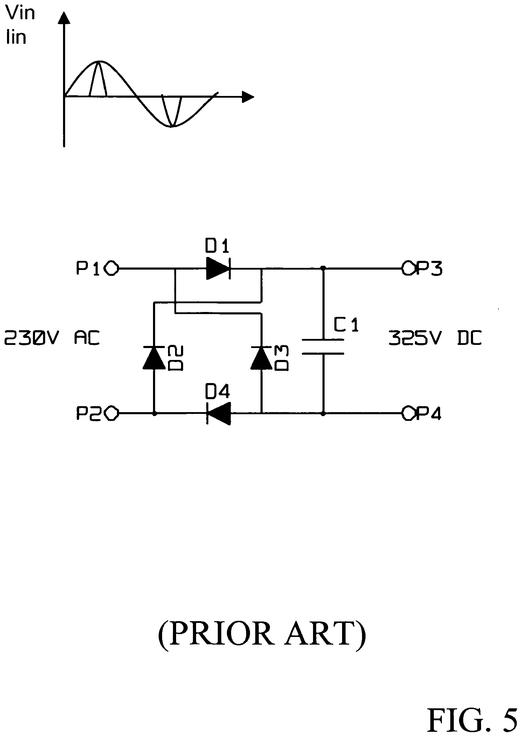

Within the EU and many other markets, there are regulations on how much interference may be generated to the network. Within the EU, standard EN61000-3-2 with amendment A14 is applied. If a switched control unit is made in the simplest way possible by rectifying the mains voltage according to Figure 5 and subsequently having so large a capacitor that the following control can continuously take current until the following pulse comes, very high harmonic components are obtained which interfere with the electric network.

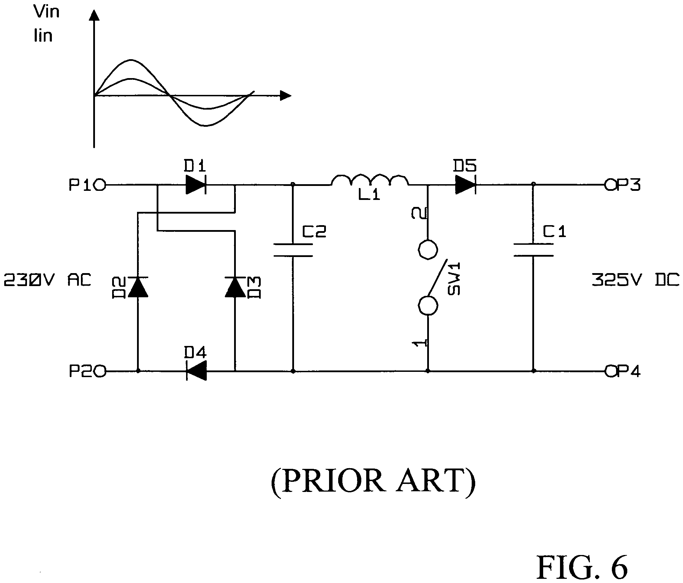

There are two conventional ways of solving this problem: A passive way by filtering the current and voltage with inductances and capacitors, and an active way. The passive way requires space as well as a great volume and weight. The active way functions in such a way that the voltage is first switched with the known "step-up" topology according to Figure 6 in such a way that the relation between the input current and the input voltage corresponds to a resistive load. The output voltage is always higher than the top value of the input voltage. The drawback with the active way is that the current goes through an extra inductance L1 and is, in addition, switched one more time, because the power correction is always followed by a switched control unit.

### BRIEF DESCRIPTION OF THE INVENTION

An object of the present invention is to alleviate above-mentioned disadvantages. The sanding machine according to the invention is characterized in that it has an electric drive motor that is brushless and without a shaft of its own, mounted in such a way that the rotor is fastened to the tool shaft and the stator is positioned in the outer housing. A sanding machine constructed in this way has a compact structure allowing the sanding machine to be gripped ergonomically with one hand. The compact structure enables a manner of use and a device in the form of an arm that can be fastened to the sanding machine for a comfortable two-hand grip and an extended range of operation for the machine. At the same time, the invention enables a hermetic structure in which the cooling air passes only on the outside of the stator and which is thus very insensitive to impurities in the cooling air. Since the sanding machine also has a low profile, the control of the grinding properties of the machine is good.

The motor type used in the invention is what is called BLDC (Brushless Direct Current) motor. Due to the strong magnetic field of the new NdFeB magnets, the motor has high power per volume and high efficiency. Thanks to these features, it has been possible to make the motor sufficiently small to enable this invention. An advantageous solution is to use a slotless version of the BLDC motor. The slotless motor has smaller iron losses and a more advantageous price because the iron core of lamination stacks has a simpler form, and the winding is simpler to carry out.

The tool shaft has a eccentrically positioned tool holder and the rotor of the drive motor without own shaft is fastened to the tool shaft, and stator is positioned in the outer housing. The tool shaft is arranged to extend within the rotor of the drive motor and therefore replaces it's own shaft.

The prior art tools have a tool shaft that is without eccentricity and balance weights. The eccentricity is made with an external part that is fastened to the motor shaft. The reason for making the eccentricity with an external part is that then the rotor can be fastened to the shaft in conventional way and the bearings can be assembled from both ends. This solution makes the sander much less compact.

The cooling air is generated by a blower that is mounted on the tool shaft and can advantageously be integrated in the same vertical direction as the balance weights of the tool shaft. The same cooling air that cools the motor first cools the control unit.

Since, thanks to the present invention, the sanding machine is much lighter and more compact than known electric sanding machines, special sanding machines intended for wall grinding have become completely unnecessary. Previously, it has been necessary to make the grinding head lighter by moving the motor to the other end of the arm but with the consequence that transmission with a cable or shafts is needed. The present sanding machine can be fastened to the end of an arm in such a way that it is freely mobile in one or more flexible directions. Since the sanding machine is so light, it is still as easy to handle as special wall sanding machines having complicated and expensive transmission. If dust extraction is needed, it is advantageous to lead the extraction to a hollow arm.

Control of the motor is carried out electronically to be able to vary the speed of rotation. The control unit is made in such a way that the speed of rotation is kept on a given level irrespective of the load of the machine. The control unit may preferably be positioned in connection with the sanding machine. A preferable solution is to use sensorless control, i.e. control without a sensing device to determine the position of the rotor in the electronic commutation. The sensorless control usually utilizes the voltage generated in the phase that is not conducting to determine the position of the rotor.

The position of the rotor in the electric commutation can also be determined on the basis of the currents generated in the different phases or the relation between current and voltage in the phases.

When the control is sensorless, the motor is more compact because the sensors, most often Hall sensors, make the motor considerably longer.

According to the new preferred solution for a switched control unit, the motor is dimensioned in such a way that the nominal voltage of the motor is lower than the top value of the rectified mains voltage. When current is consumed during that part of the cycle when the voltage is higher than the nominal voltage of the motor and no current is consumed when the voltage is lower than the nominal voltage of the motor, different degrees of power correction are obtained, depending on how much lower the nominal voltage is. If the time during which the current corresponds to an optimal load in relation to the whole cycle is sufficiently long, the harmonic components generated back to the electric network will be within the allowed values. When mains voltage of 230 V is rectified, a top value of 325 V is obtained. If the nominal voltage of the motor is, for example, 200 V, there is a current flow approximately 60 % of the time. The current is generated in such a way that no current flows when the rectified mains voltage is equal to the nominal voltage, and it increases linearly in such a way that the current is 10 A when the voltage is 325 V. This gives an effective power of approximately 1,100 W. The third harmonic current component is thus 2.4 A, which is within the allowed limit for a portable hand tool. The other harmonic components also have allowed values. Since the windings of the motor form a coil with self-inductance L1, the switched control unit can also be preferably made without external inductances.

### BRIEF DESCRIPTION OF THE FIGURES

The invention is described in more detail in the following with reference to the attached drawings, in which
Figure 1 shows a top view of the sanding machine;
Figure 2 shows a side view of the sanding machine;
Figure 3 shows a cross-section along line A-A;
Figure 4 shows a cross-section along line B-B;
Figure 5 shows an electricity drawing of prior art control;
Figure 6 shows prior art power correction;
Figure 7 shows a first embodiment of new motor control; and
Figure 8 shows a second embodiment of the motor control.

### PREFERRED EMBODIMENTS

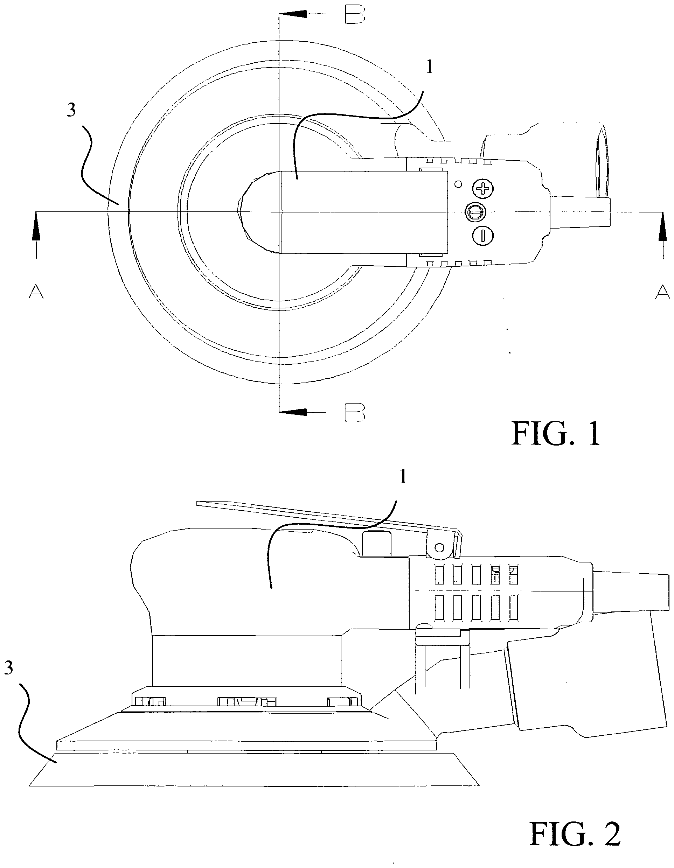

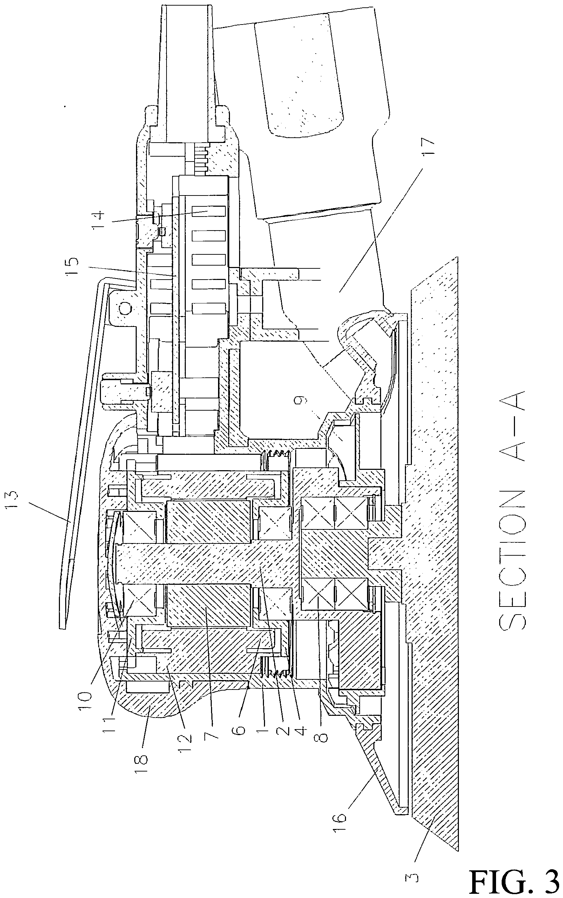

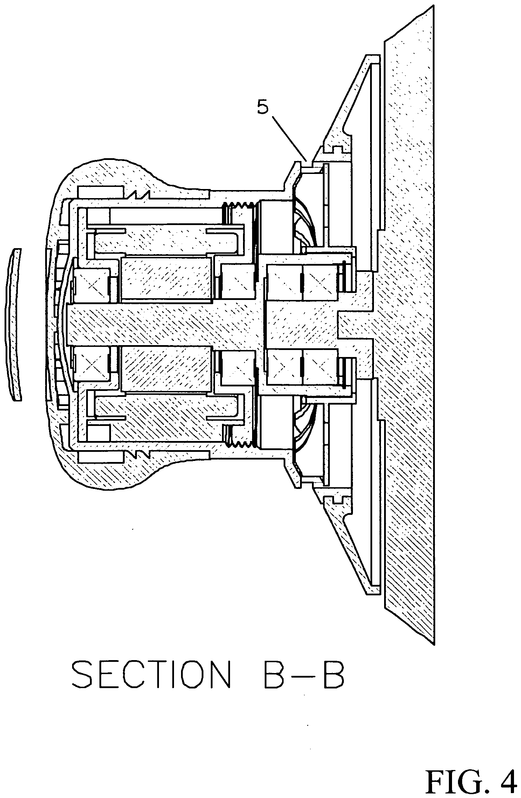

The sanding machine shown in Figures 1 to 4 is formed of a housing 1 enclosing all parts of the motor. The motor is formed of a stator 6, including a casing with cooling fins 12 and a rotor 7. These parts are integrated with the parts keeping a tool shaft 2, a bearing housing at both ends 4, 11 and a bearing 10 in place, in such a way that the rotor 7 is fastened to the tool shaft 2. The casing and cooling fins of the stator 6 are shaped in such a way that an air slot is generated which is limited by the casing, the housing of the sanding machine and the cooling fins. The grinding disc 3 is fastened freely rotationally to the tool shaft 2 via an eccentric bearing 8. The blower 9, which is fastened to the tool shaft 2 preferably at the same height as the balance weights, sucks in air through the hole 14. The air cools the control unit 15 and then the motor via the cooling fins 12. The air is blown out through the hole 5. The shroud 16 collects the grinding dust that is sucked out through the grinding disc 3 and further out through the extraction pipe 17. The switch 13 is in connection with the control unit and attends to the switching on and switching off ergonomically. A soft part 18 around the casing makes the machine grip-friendly. In another embodiment, the disc is not freely rotating, but the disc is rotating with or without eccentric movement through a connection to the tool shaft 2.

The rotor is prevented to rotate in respect to the shaft with a woodruff key where the corresponding slot is shown in the rotor in picture 4. The rotor can also be prevented to rotate with other kind of keys or with splines.

The balance weights that are integrated in the tool shaft are so large that the bearing 10 (lower part) has to be mounted before the rotor is fastened to the tool shaft.

To enhance the compactness the bearings 10 and the bearing housings 4, 11 are partly or fully inside the stator 6 or the windings.

In another embodiment, the dust extraction also attends to the cooling of the motor in such a way that part of the air is sucked via the motor and the cooling fins, and in this way the motor cools off without a separate blower.

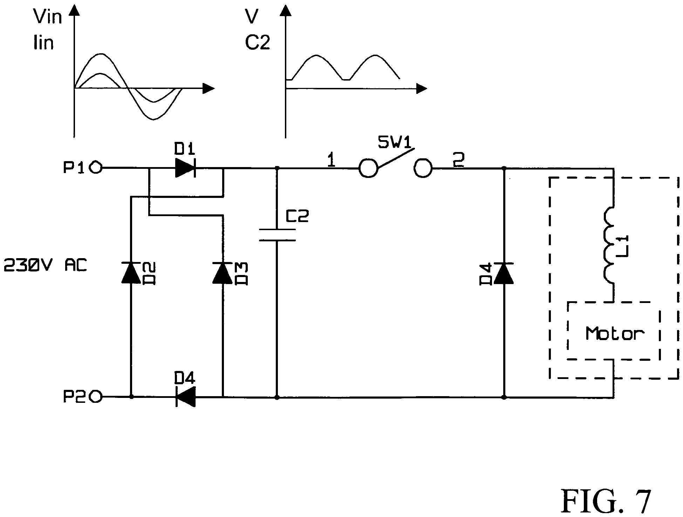

Functioning of the power correction of the control unit in a first embodiment is described in Figure 7. The mains voltage is rectified and the following capacitor C2 is so small that the voltage follows the rectified voltage. The motor is dimensioned in such a way that the nominal voltage of the motor is so much lower than the top value of the rectified mains voltage in relation to the required power that power correction is obtained when current is consumed during that part of the cycle when the voltage is higher than the nominal voltage of the motor and no current is consumed when the voltage is lower than the nominal voltage of the motor. The control unit utilizes the well-known "step-down" topology in such a way that the relation between current and voltage is optimized so that smallest harmonic components possible are generated, and thus also the best possible power correction is achieved in that part of the cycle in which the voltage is higher than the nominal voltage of the motor. If the voltage is lower than the nominal voltage, no power is taken to the motor. If the time when the current corresponds to the optimal load in relation to the whole cycle is sufficiently long in relation to the required power, the harmonic components generated back to the electric network will be within allowed values. If the self-inductance L1 of the motor is sufficiently great, the control unit can preferably be made without external inductances. The motor in Figure 7 has been simplified in such a way that only one switch SW1 is shown. In practice, electronically commutated 3-phase control is directly carried out for the motor.

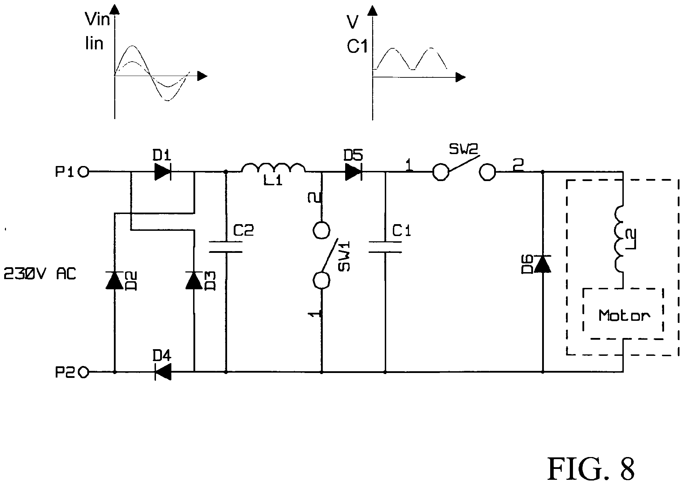

If the power correction obtained is not sufficient, the function can be further improved according to the embodiment in Figure 8. Here, an external inductance L1 and an extra switch according to "step-up" topology have been incorporated to carry out power correction also during the time when the voltage is lower than the nominal voltage of the motor. The connection is still preferable because the current and the voltage are lower than in a case where the power correction should be carried out during the whole cycle. Above all, the value at the external inductance L1 may be lower because the voltage is lower when the switching is carried out.

The above description and the related figures are only intended to illustrate a present solution for the structure of a sanding machine. The invention is defined in the attached claims.

## Claims

1. A hand-held sanding machine with an outer housing (1), a tool shaft (2) and a brushless electric drive motor, a stator (6) is positioned in the outer housing (1), **characterized in that**
- the tool shaft (2) has a eccentrically positioned tool holder, and
- the rotor of the drive motor without own shaft is fastened to the tool shaft, which extends within the rotor of the drive motor.

2. A sanding machine according to claim 1, **characterized in that** the brushless motor is slotless.

3. A sanding machine according to claim 1 or 2, **characterized in that** the grinding disc (3) is mounted on the tool shaft (2) eccentrically freely rotationally.

4. A sanding machine according to claim 3, **characterized in that** the grinding disc (3) is with or without reduction gear mounted on the tool shaft (2) in such a way that a rotating movement is generated.

5. A sanding machine according to claims 1 to 4, **characterized in that** the control unit of the motor is arranged in such a way that the speed of rotation is constant irrespective of the load.

6. A sanding machine according to claim 5, **characterized in that** the control unit is a sensorless control unit and that the sensorless control unit is arranged to determine the position of the rotor in the electronic commutation by the voltage generated in the phase that is not conducting.

7. A sanding machine according to claims 1 to 6 with a control unit (15), where the mains voltage is rectified and the following capacitor (C2) is dimensioned so small that in use the voltage follows the rectified mains voltage and thus current is consumed from the network during the time when the voltage is loaded, **characterized in that** the motor is dimensioned in such a way that the nominal voltage of the motor is to be so much lower than the top value of the rectified mains voltage in relation to the required power that power correction is obtained when current is consumed during that part of the cycle when the voltage is higher than the nominal voltage of the motor and no current is consumed when the voltage is lower than the nominal voltage of the motor.

8. A sanding machine according to claim 7, **characterized in that** the relation between current and voltage is optimized **in that** part of the cycle in which the voltage is higher than the nominal voltage of the motor so that smallest harmonic component possible is generated, and thus also the best possible power correction is obtained.

9. A sanding machine according to claims 7 to 8, **characterized in that** the switched power aggregate uses only the motor's own inductance (L1) as the inductive component in the switching.

10. A sanding machine according to any previous claim, **characterized in that** the motor is cooled by a blower (9) which is mounted on the tool shaft (2).

11. A sanding machine according to any previous claim, **characterized in that** the cooling air cools the stator (6) of the motor by flowing through the slot generated between the inside of the outer housing (1) and the outside of the stator (6).

12. A sanding machine according to any previous claim, **characterized in that** the stator (6) is shaped in such a way that it is, at the same time, the housing of the sanding machine.

13. A sanding machine according to claim 12, **characterized in that** the stator (6) has built-in cooling channels.

14. A sanding machine according to any previous claim, **characterized in that** structure of the stator, the bearing housings and bearings, is a hermetic structure in which the cooling air passes only on the outside of the motor.

15. A sanding machine according to claim 8 or 9, **characterized in that** power correction is carried out also during that time when the rectified voltage is lower than the nominal voltage of the motor.

## Patentansprüche

1. Eine Handschleifmaschine mit einem äußeren Gehäuse (1), einem Werkzeugschaft (2) und einen bürstenlosen elektrischen Betriebsmotor, wobei der Stator (6) in dem äußeren Gehäuse (1) angeordnet ist, **dadurch gekennzeichnet, dass**
- der Werkzeugschaft (2) einen exzentrisch angeordneten Werkzeughalter aufweist, und
- der Rotor des Betriebsmotors ohne einen eigenen Schaft an dem Werkzeugschaft befestigt ist, der sich innerhalb des Rotors des Betriebsmotors erstreckt.

2. Eine Schleifmaschine gemäß dem Patentanspruch 1, **dadurch gekennzeichnet, dass** der bürstenlose Motor schlitzlos ist.

3. Eine Schleifmaschine gemäß dem Patentanspruch 1 oder 2, **dadurch gekennzeichnet, dass** eine Schleifscheibe (3) an dem Werkzeugschaft (2) exzentrisch, frei rotierend angeordnet ist.

4. Eine Schleifmaschine gemäß dem Patentanspruch 3, **dadurch gekennzeichnet, dass** die Schleifscheibe (3) mit oder ohne Verzögerungsgetriebe derart an dem Werkzeugschaft angeordnet ist, dass eine rotierende Bewegung erzeugt wird.

5. Eine Schleifmaschine gemäß den Patentansprüchen 1 bis 4, **dadurch gekennzeichnet, dass** die Kontrolleinheit des Motors derart angeordnet ist, dass die Rotationsgeschwindigkeit unabhängig von der Belastung konstant ist.

6. Eine Schleifmaschine gemäß dem Patentanspruch 5, **dadurch gekennzeichnet, dass** die Steuereinheit eine Steuereinheit ohne Sensor ist, und dass die Steuereinheit ohne Sensor angeordnet ist, die Position des Rotors in der elektronischen Kommutation durch die in der nicht-leitenden Phase erzeugten Spannung bestimmt wird.

7. Eine Schleifmaschine gemäß den Ansprüchen 1 bis 6 mit einer Steuereinheit (15), in der Leitungsstrom gleichgerichtet wird und der folgende Kondensator (C2) so klein dimensioniert ist, dass beim Betrieb die Spannung dem gleichgerichteten Leitungsstrom folgt und somit der Strom vom Netz während der Zeit, in der die Spannung geladen wird, verbraucht wird, **dadurch gekennzeichnet, dass** der Motor derart dimensioniert ist, dass die Nominalspannung des Motors so viel niedriger als der Höchstwert des gleichgerichteten Leitungsstroms in Bezug auf die benötigte Kraft zu sein hat, dass die Kraftkorrektur erhalten wird, wenn der Strom denjenigen Teil des Zyklus, in dem die Spannung höher als die Nominalspannung des Motors ist, und kein Strom verbraucht wird, wenn die Spannung kleiner als die Nominalspannung des Motors ist.

8. Eine Schleifmaschine gemäß dem Patentanspruch 7, **dadurch gekennzeichnet, dass** das Verhältnis zwischen Strom und Spannung in demjenigen Teil des Zyklus, in dem die Spannung höher als die Nominalspannung des Motors ist, optimiert wird, so dass die kleinstmögliche Oberschwingungskomponente generiert wird, und somit die bestmögliche Kraftkorrektur erhalten wird.

9. Eine Schleifmaschine gemäß den Ansprüchen 7 bis 8, **dadurch gekennzeichnet, dass** das eingeschaltete Kraftaggregat nur die eigene Induktanz (L1) des Motors als induktive Komponente beim Einschalten benutzt.

10. Eine Schleifmaschine gemäß einem der vorangehenden Patentansprüche, **dadurch gekennzeichnet, dass** der Motor durch einen Bläser (9) gekühlt wird, der an dem Werkzeugschaft (2) angeordnet ist.

11. Eine Schleifmaschine gemäß einem der vorangehenden Patentansprüche, **dadurch gekennzeichnet, dass** die Kühlungsluft den Stator (6) des Motors dadurch kühlt, dass sie durch den zwischen der Innenseite des äußeren Gehäuses (1) und der Außenseite des Stators (6) gebildeten Schlitz strömt.

12. Eine Schleifmaschine gemäß einem der vorangehenden Patentansprüche, **dadurch gekennzeichnet, dass** der Stator (6) derart geformt ist, dass er gleichzeitig das Gehäuse (1) der Schleifmaschine bildet.

13. Eine Schleifmaschine gemäß dem Patentanspruch 12, **dadurch gekennzeichnet, dass** der Stator (6) eingebaute Kühlkanäle aufweist.

14. Eine Schleifmaschine gemäß einem der vorangehenden Patentansprüche, **dadurch gekennzeichnet, dass** die Struktur des Stators, die stützenden Gehäuse und Stützen, eine hermetische Struktur ist, in der die Kühlungsluft nur auf der Außenseite des Motors vorbeiströmt.

15. Eine Schleifmaschine gemäß dem Patentanspruch 8 oder 9, **dadurch gekennzeichnet, dass** die Kraftkorrektur auch während der Zeit, wenn die gleichgerichtete Spannung niedriger als die Nominalspannung des Motors ist, durchgeführt wird.

## Revendications

1. Machine à poncer portative dotée d'un logement extérieur (1), d'une tige d'outil (2) et d'un moteur d'entraînement électrique sans balai, un stator (6) étant positionné dans le logement extérieur (1), **caractérisée en ce que** :
- la tige d'outil (2) présente un porte-outil positionné de manière excentrée ; et
- le rotor du moteur d'entraînement en dehors de sa propre tige, est fixé à la tige d'outil, qui s'étend à l'intérieur du rotor du moteur d'entraînement.

2. Machine à poncer selon la revendication 1, **caractérisée en ce que** le moteur sans balai ne présente pas d'encoches.

3. Machine à poncer selon la revendication 1 ou 2, **caractérisée en ce que** le disque à poncer (3) est monté sur la tige d'outil (2) de manière excentrée et en rotation libre.

4. Machine à poncer selon la revendication 3, **caractérisée en ce que** le disque à poncer (3) présente ou non un engrenage réducteur monté sur la tige d'outil (2) de telle sorte qu'un déplacement en rotation est généré.

5. Machine à poncer selon les revendications 1 à 4, **caractérisée en ce que** l'unité de commande du moteur est agencée de telle sorte que la vitesse de rotation est constante quelle que soit la charge.

6. Machine à poncer selon la revendication 5, **caractérisée en ce que** l'unité de commande est une unité de commande sans capteur et **en ce que** l'unité de commande sans capteur est agencée de façon à déterminer la position du rotor dans la commutation électronique grâce à la tension générée dans la phase qui ne conduit pas.

7. Machine à poncer selon les revendications 1 à 6, dotée d'une unité de commande (15), dans laquelle la tension de secteur est redressée et le condensateur suivant (C2) est dimensionné à une valeur si petite que, en service, la tension suit la tension de secteur redressée et ainsi un courant est consommé à partir du réseau pendant le temps où la tension est chargée, **caractérisée en ce que** le moteur est dimensionné de telle façon que la tension nominale du moteur doit être suffisamment plus faible que la valeur crête de la tension de secteur redressée par rapport à la puissance requise pour qu'une correction de puissance soit obtenue lorsque le courant est consommé pendant cette partie du cycle où la tension est plus élevée que la tension nominale du moteur et aucun courant n'est consommé lorsque la tension est plus faible que la tension nominale du moteur.

8. Machine à poncer selon la revendication 7, **caractérisée en ce que** la relation entre le courant et la tension est optimisée dans cette partie du cycle où la tension est plus élevée que la tension nominale du moteur de façon à générer la plus petite composante harmonique possible, et ainsi la meilleure correction de puissance possible est également obtenue.

9. Machine à poncer selon les revendications 7 à 8, **caractérisée en ce que** l'agrégat de puissance commutée utilise uniquement la propre inductance du moteur (L1) en tant que composante inductive dans la commutation.

10. Machine à poncer selon l'une quelconque des revendications précédentes, **caractérisée en ce que** le moteur est refroidi par un ventilateur (9) qui est monté sur la tige d'outil (2).

11. Machine à poncer selon l'une quelconque des revendications précédentes, **caractérisée en ce que** l'air de refroidissement refroidit le stator (6) du moteur en s'écoulant à travers l'encoche ménagée entre l'intérieur du logement extérieur (1) et l'extérieur du stator (6).

12. Machine à poncer selon l'une quelconque des revendications précédentes, **caractérisée en ce que** le stator (6) est formé de telle sorte qu'il est en même temps le logement de la machine à poncer.

13. Machine à poncer selon la revendication 12, **caractérisée en ce que** le stator (6) présente des canaux de refroidissement intégrés.

14. Machine à poncer selon l'une quelconque des revendications précédentes, **caractérisée en ce que** la structure du stator, des logements des roulements et des roulements, est une structure hermétique dans laquelle l'air de refroidissement passe seulement sur l'extérieur du moteur.

15. Machine à poncer selon la revendication 8 ou 9, **caractérisée en ce qu'**une correction de puissance est exécutée également pendant le temps où la tension redressée est inférieure à la tension nominale du moteur.
